# EUROPEAN PATENT SPECIFICATION

(11) **EP 3 568 275 B1**
(45) Date of publication and mention of the grant of the patent: **20.10.2021**
(21) Application number: 18808134.3
(22) Date of filing: 10.01.2018
(51) Int. Cl.: B28B 11/04, C04B 28/02, C04B 18/04, E04C 1/41, E04B 2/18

(54) **BUILDING BRICK AND MANUFACTURING METHOD THEREOF**
BAUSTEIN UND HERSTELLUNGSVERFAHREN DAFÜR
BRIQUE DE CONSTRUCTION ET SON PROCÉDÉ DE FABRICATION

(30) Priority: 10.01.2017 TR 201700297
(43) Date of publication of application: 20.11.2019
(73) Proprietor: Akin Mermer Tekstil Insaat Makina Enerji Sanayi Ve Ticaret Ltd. STI., Burdur (TR)
(72) Inventor: AKIN, Ercan, Burdur (TR)
(74) Representative: Sevinç, Erkan
(86) International application number: PCT/TR2018/050008
(87) International publication number: WO 2019/004954

(56) References cited:
- WO-A1-2015/150550
- WO-A2-2018/231177
- FR-A1- 3 023 859
- FAKHER J AUKOUR: "Incorporation of Marble Sludge in Industrial Building Eco-blocks or Cement Bricks Formulation", JORDAN JOURNAL OF CIVIL ENGINEERING, [Online] vol. 31, no. 1, 1 January 2009 (2009-01-01), pages 58-65, XP055558032, ISSN: 1993-0461 [retrieved on 2019-02-18]
- Anonymous: "Bricks from marble dust", The Hindu Business Line, 12 December 2001 (2001-12-12), XP055558027, Retrieved from the Internet: URL:https://www.thehindubusinessline.com/2 001/12/12/stories/041267m2.htm [retrieved on 2019-02-18]
- Dina M Sadek ET AL: "UTILIZATION OF SOLID WASTES IN CEMENT BRICKS FOR AN ENVIRONMENTAL BENEFICIAL", Annals of the Faculty of Engineering Hunedoara, 1 July 2013 (2013-07-01), page 187, XP055177545, Hunedoara Retrieved from the Internet: URL:http://search.proquest.com/docview/142 9362249 [retrieved on 2019-02-19]

## Description

### Technical Field of the Invention

The present invention relates to the technical field of construction materials, in particular to an improved building brick and a method for manufacturing the same.

### Background of the Invention

Bricks are construction materials that may have different physical, chemical and mechanical properties depending on the varying ingredients thereof. They mainly comprise clay and red sand, then heated to a certain temperature in a kiln, and molded into a conventional shape for the production of bricks. In order to meet the needs of user, researches on reinforced concrete materials have gained importance as to improve the physical, chemical and/or mechanical properties of buildings. As a result of these researches, use of different types of ingredients is often preferred in construction industry.

Considering the growth of population, increasing urbanization and living standards which cause an increase in types and amounts of solid wastes and pose a major environment and ecological problem, investigation of the usability of waste marble dust and sludge as an additive material in construction industry is an important need since waste marble dust/sludge is one of the major industrial wastes produced by marble processing industries. On the other hand, the usage of marble wastes for the production of industrial bricks has significant important role on the recycling waste marble powder in the brick production along with great contributions to economy and ecology of the country.

Thus, the present invention discloses an improved brick to be used in the construction industry and a method for manufacturing said brick by using/recycling waste materials of marble (i.e. marble sludge, marble dust). The building brick of the present invention minimizes heat loss in buildings, provides recycling of marble residues, eliminates the cost of thermal sheathing, reduces construction costs, removes chemical damage, provides long service life, provides fire resistance and resists to pests.

In "Incorporation of Marble Sludge in Industrial Building Eco-blocks or Cement Bricks Formulation", Fakher J. Aukour (JORDAN JOURNAL OF CIVIL ENGINEERING, vol. 91, no. 1, 1 January 2009, pages 59-55, XP055558032) disclosed a method for manufacturing artificial building blocks by using raw marble sludge and cement. It is further disclosed that the mixture may comprise further fillers such as limestone gravel.

WO 2015/150550 A1 concerns a method for producing a masonry block, in particular a composite insulating building block comprising at least one cavity; and the block obtained with said method. Furthermore, it is suggested to fill said cavity with mineral cement foam substantially not containing any calcium aluminate cement.

### Objects of the Invention

Primary object of the present invention is to provide an improved building brick filled with and made of environment friendly materials, preferably provided by recycling marble residues.

Another object of the present invention is to provide an improved building brick having internal hollow cavities that are filled with insulation material for providing enhanced thermal and sound insulating capacity.

Another object of the present invention is to provide an improved building brick where the adherence of the insulation material to inner surfaces of the building brick cavity is improved.

Another object of the present invention is to provide an improved building brick and a method for manufacturing the same where the unit weight of the brick is reduced. Another object of the present invention is to provide an improved building brick with high fire resistance, enhanced physical, chemical and mechanical strength.

A further object of present invention is to provide a building brick and a method for manufacturing the same where the durability of the brick is enhanced, at lower cost via saving workmanship and time.

### Summary of the Invention

The present invention proposes building bricks mainly made of marble sludge and/or marble dust with cement. In addition to these ingredients, pumice aggregate, perlite, clinker, water repellent polymer, air entraining agent, coated calcite, binder fibers and/or silica sand may also be used in the production of said bricks. Each brick comprises at least one internal cavity, filled with a further material for providing a brick having an enhanced insulating capacity, wherein said further material is an insulation material that is made of marble sludge and/or marble dust together with foam agent and cement.

Present invention also proposes a method for producing building bricks comprising the following sequential steps: - mixing marble sludge and/or marble dust with cement and water within a mixer for obtaining moldable mortar, - feeding the obtained mortar into a vacuum extruder equipped with a hollow-formed mold for producing extruded hollow-materials, - cutting formed extruded materials within a cutting unit for forming bricks each having at least one cavity (1.1), - curing the formed bricks, - scalping the cured bricks for bringing the same into pre-defined dimensions. The disclosed method also discloses an additional step of: - pouring a pre-prepared insulation material into at least one cavity of each brick.

### Brief Description of the Figures

The figures, whose brief explanations are herewith provided, are solely intended for providing a better understanding of the present invention and are as such not intended to define the scope of protection or the context in which said scope is to be interpreted in the absence of the description.

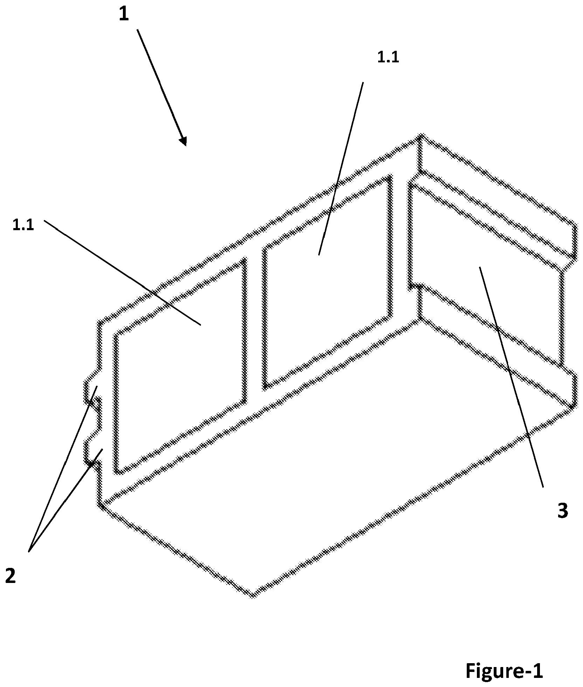

Figure 1 shows a perspective view of a building brick with cavities according to the present invention.

### Detailed Description of the Invention

The present invention discloses an improved building brick (1) which will be used as a construction material. Said brick (1) mainly comprises marble sludge and/or marble dust together with cement. In addition to the ingredients disclosed here, said improved brick (1) may further comprise pumice aggregate, perlite, clinker, water repellent polymer, air entraining agent, coated calcite, binder fibers and/or silica sand according to the need of use. According to a preferred embodiment, said brick (1) comprises pumice aggregate in addition to cement and marble sludge and/or marble dust.

Furthermore, said improved building brick (1) comprises at least one internal cavity (1.1) filled with a further material for providing a brick (1) having reduced weight and enhanced insulating capacity. Here mentioned material is an insulation material that is made of marble sludge and/or marble dust together with foam agent and cement. Said insulation material may further comprise one or more of silica sand, ash and pumice.

The building bricks (1) of the present invention for construction and landscape architecture are manufactured by the following method steps:
a) mixing marble sludge and/or marble dust with cement and water in a mixer for obtaining moldable mortar,
b) feeding the obtained moldable mortar into a vacuum extruder for producing extruded materials,
c) cutting formed extruded materials within a cutting unit for forming bricks,
d) curing the formed bricks,
e) scalping the cured bricks (1) for bringing the same into pre-defined dimensions,
f) packaging the obtained building bricks (1).

In above described manufacturing method of the building brick (1), a vacuum extruder (vacuum extrusion device) is used to remove unwanted air trapped in the moldable mortar because failure to remove such air may result in the manufactured bricks (1) to have a defective or nonhomogeneous structure matrix.

As previously mentioned in method step a), marble sludge and/or marble dust are mixed with cement and water for obtaining the moldable mortar. Additionally, one or more of pumice aggregate, perlite, clinker, water repellent polymer, air entraining agent, coated calcite, binder fibers and/or silica sand may further be added in addition to said ingredients in said mixing step, according to the need of use. Addition of pumice aggregate into the mortar mixture gains high thermal and sound insulation capacity to the obtained construction material. The use of perlite in mortar provides increased thermal and sound insulation properties of the obtained brick (1) due to porous structure of perlite. Also, clinker mainly acts as a binder in mortar mixtures. The water repellent polymer fills the gaps formed in the moldable mortar to impart water repellent properties to the hardened concrete. Also it does not affect the breathability and stability of the concrete. Air entraining agent provides small air bubbles which are uniformly dispersed in the controlled amount of mortar during mixing and also persistent after curing. Coated calcite shortens the drying period of mortar. Addition of the binder fibers increases the strength, crack control, strain capacity, impact strength and durability of the manufactured bricks (1).

Said vacuum extruder used in above-described method is equipped with a hollow-formed mold to produce extruded hollow-materials. Accordingly, the building bricks (1) obtained by the disclosed method comprise one or more internal cavities (1.1), which enhance insulation capabilities and reduce total weight of the building. Also, said internal cavities (1.1) create a healthy environment by adjusting the heat and humidity balances in the rooms with the breathing feature of the brick (1).

Said internal cavities (1.1) of the manufactured bricks (1) are filled up with suitable different materials, to meet different usage needs. Accordingly, above disclosed manufacturing method comprises additional method step of - pouring a pre-prepared insulation material into at least one cavity (1.1) of each brick (1), processed after the step c) of above disclosed brick (1) manufacturing method.Said insulation material is foam concrete and above disclosed brick (1) manufacturing method also comprises following sequential steps, processed before additional method step of pouring a pre-prepared insulation material into at least one cavity (1.1) of each brick (1);
I. mixing marble sludge and/or marble dust with cement for obtaining concrete grout,
II. combining foam agent and water together with air for obtaining foam,
III. mixing the concrete grout obtained in step I) and the foam obtained in step II) for obtaining foam concrete as an insulation material.

On the other hand, during the mixing step (step I), one or more of silica sand, ash and pumice may further be mixed with the ingredients of step I) for obtaining the concrete grout.

As detailed in the above disclosed manufacturing method, according to the invention, the foam concrete is poured into at least one cavity (1.1) of the building brick (1) in liquid phase at the time of production and, the manufactured end product already includes the insulation material as predetermined. In other words, curing of the uncured brick (1) obtained on step c) of above disclosed method and the insulation material that is readily poured into the cavity/cavities (1.1) of said brick (1) is performed together in pre-established steps of the production method. Thus, the production time is reduced and also the adherence of the insulation material to inner surfaces of the building brick (1) cavity (1.1) is improved. On the other hand, in applications where the bricks (1) and the insulation material are produced separately and gathered together before submitting the end product to the user, disadvantages such as sizing the materials and need of an adhesive for engaging the insulation material into the brick (1) are encountered.

Manufactured building bricks (1) with foam concrete are environment-friendly since they are made of recycling marble residues i.e., marble sludge and/or marble dust, and also it is simple and easy to implement. Also, because of the foam concrete filled into the cavities of the brick (1) causes the end product to have high thermal and sound insulating capacity.

According to a preferred embodiment of the present invention, at least a first outer lateral surface of the building brick (1) is provided with one or more protrusions (2) while one or more recesses (3) are formed on a second outer lateral surface, which is positioned to opposite of the first outer lateral surface. Said protrusions (2) and recesses (3) of the building bricks (1) allow greater stability and strength in the construction of walls and partitions. When stacking said bricks (1), the first outer lateral surfaces provided with protrusions (2) are positioned as to be in contact with the second outer lateral surfaces provided with corresponding complementary recesses (3), and a security lock is obtained by allowing a significant saving of cement used for pasting bricks together, while increasing the strength of the modified parts.

## Claims

1. A building brick (1) to be used as a construction material comprises following components:
- marble sludge and/or marble dust, and
- cement,
wherein said building brick (1) has one or more cavities (1.1) constituted within the brick (1), and
at least one of said internal cavities (1.1) is filled with a further material which is an insulation material manufactured from marble sludge and/or marble dust together with foam agent and cement.

2. The building brick (1) according to claim 1, wherein said brick (1) further comprises one or more of the following components; pumice aggregate, perlite, clinker, water repellent polymer, air entraining agent, coated calcite, binder fibers and silica sand.

3. The building brick (1) according to claim 1 or 2, wherein said insulation material is further manufactured from one or more of silica sand, ash and pumice.

4. The building brick (1) according to any one of the previous claims, wherein said building brick (1) comprises one or more protrusions (2) formed on at least a first outer lateral surface thereof and also, one or more recesses (3) formed on a second outer lateral surface, which is opposite to said first outer lateral surface.

5. A method for producing building bricks (1) comprising the following sequential steps:
a) mixing marble sludge and/or marble dust with cement and water in a mixer for obtaining moldable mortar,
b) feeding the obtained moldable mortar into a vacuum extruder equipped with a hollow-formed mold for producing extruded hollow-materials,
c) cutting formed extruded materials within a cutting unit for forming bricks each having at least one cavity (1.1),
c2) pouring a pre-prepared insulation material into at least one cavity (1.1) of each brick (1) wherein said insulation material is foam concrete,
d) curing the formed bricks,
e) scalping the cured bricks (1) for bringing the same into pre-defined dimensions,
f) packaging the obtained building bricks (1).
wherein said method further comprises the following sequential preparation steps of said insulation material, processed before the method step c2 above;
I. mixing marble sludge and/or marble dust with cement for obtaining concrete grout,
II. combining foam agent and water together with air for obtaining foam,
III. mixing the concrete grout obtained in step I) and the foam obtained in step II) for obtaining foam concrete as an insulation material.

6. Method for producing building bricks (1) according to claim 5, wherein one or more of pumice aggregate, perlite, clinker, water repellent polymer, air entraining agent, coated calcite, binder fibers and silica sand are added into the mixer for obtaining said mortar, in addition to the ingredients disclosed in step a) of claim 5.

7. Method for producing building bricks (1) according to claim 5, wherein one or more of silica sand, ash and pumice are mixed with the ingredients disclosed in step I) of claim 5, for obtaining said concrete grout.

## Patentansprüche

1. Bauziegel (1) zur Verwendung als Baumaterial umfassend die folgenden Komponenten:
- Marmorschlamm und/oder Marmorstaub, und
- Zement,
wobei der Bauziegel (1) einen oder mehrere Hohlräume (1.1) aufweist, die innerhalb des Ziegels (1) ausgebildet sind, und wobei mindestens einer der inneren Hohlräume (1.1) mit einem weiteren Material gefüllt ist, das ein Isoliermaterial ist, das aus Marmorschlamm und/oder Marmorstaub zusammen mit einem Schaummittel und Zement hergestellt ist.

2. Bauziegel (1) nach Anspruch 1, wobei der Ziegel (1) ferner eine oder mehrere der folgenden Komponenten umfasst: Bimssteinaggregat, Perlit, Klinker, wasserabweisendes Polymer, Luftporenbildner, beschichteter Calcit, Bindemittelfasern und Quarzsand.

3. Bauziegel (1) nach Anspruch 1 oder 2, wobei das Isoliermaterial ferner aus einem oder mehreren der folgenden Bestandteile hergestellt ist: Quarzsand, Asche und Bimsstein.

4. Bauziegel (1) nach einem der vorhergehenden Ansprüche, wobei der Bauziegel (1) einen oder mehrere Vorsprünge (2), die auf mindestens einer ersten äußeren Seitenfläche desselben ausgebildet sind, und auch eine oder mehrere Vertiefungen (3) umfasst, die auf einer zweiten äußeren Seitenfläche ausgebildet sind, die der ersten äußeren Seitenfläche gegenüberliegt.

5. Verfahren zur Herstellung von Bauziegeln (1) die folgenden aufeinanderfolgenden Schritte umfassend:
a) Mischen von Marmorschlamm und/oder Marmorstaub mit Zement und Wasser in einem Mischer, um einen formbaren Mörtel zu erhalten,
b) Zuführen des erhaltenen formbaren Mörtels in einen Vakuumextruder, der mit einer hohlgeformten Form zur Herstellung von extrudierten Hohlkörpern ausgestattet ist,
c) Schneiden der geformten extrudierten Materialien in einer Schneideeinheit zur Herstellung von Ziegeln mit jeweils mindestens einem Hohlraum (1.1),
c2) Gießen eines vorbereiteten Isoliermaterials in mindestens einen Hohlraum (1.1) eines jeden Ziegels (1), wobei das Isoliermaterial Schaumbeton ist,
d) Aushärten der geformten Ziegel,
e) Schneiden der ausgehärteten Ziegel (1), um sie auf die vordefinierten Abmessungen zu bringen,
f) Verpacken der erhaltenen Bauziegel (1),
wobei das Verfahren ferner die folgenden aufeinanderfolgenden Vorbereitungsschritte des Isoliermaterials umfasst, die vor dem obigen Verfahrensschritt c2 durchgeführt werden;
I. Mischen von Marmorschlamm und/oder Marmorstaub mit Zement zur Herstellung von Betonfugenmörtel,
II. Kombinieren von Schaummittel und Wasser zusammen mit Luft, um Schaum zu erhalten,
III. Mischen des in Schritt I) erhaltenen Betonfugenmörtels und des in Schritt II) erhaltenen Schaums zur Gewinnung von Schaumbeton als Isoliermaterial.

6. Verfahren zur Herstellung von Bauziegel (1) nach Anspruch 5, wobei dem Mischer zur Herstellung des Mörtels zusätzlich zu den in Schritt a) des Anspruchs 5 offenbarten Bestandteilen, Bimssteinaggregat, Perlit, Klinker, wasserabweisendes Polymer, Luftporenbildner, beschichteter Calcit, Bindemittelfasern und/oder Quarzsand zugegeben werden.

7. Verfahren zur Herstellung von Mauersteinen (1) nach Anspruch 5, wobei Quarzsand, Asche und/oder Bimsstein mit den in Schritt I) des Anspruchs 5 offenbarten Bestandteilen gemischt werden, um den Betonfugenmörtel zu erhalten.

## Revendications

1. Brique de construction (1) destinée à être utilisée comme matériau de construction, comprenant les composants suivants :
- de la boue de marbre et/ou de la poussière de marbre, et
- du ciment,
ladite brique de construction (1) ayant une ou plusieurs cavités (1.1) constituées à l'intérieur de la brique (1), et
au moins l'une desdites cavités internes (1.1) étant remplie d'un autre matériau qui est un matériau d'isolation fabriqué à partir de boue de marbre et/ou de poussière de marbre conjointement avec un agent moussant et du ciment.

2. Brique de construction (1) selon la revendication 1, ladite brique (1) comprenant en outre un ou plusieurs des composants suivants : un agrégat de pierre ponce, de la perlite, du clinker, un polymère hydrofuge, un agent entraîneur d'air, de la calcite enrobée, des fibres de liant et du sable de silice.

3. Brique de construction (1) selon la revendication 1 ou 2, dans laquelle ledit matériau d'isolation est en outre fabriqué à partir d'un ou plusieurs parmi du sable de silice, de la cendre et de la pierre ponce.

4. Brique de construction (1) selon l'une quelconque des revendications précédentes, ladite brique de construction (1) comprenant une ou plusieurs saillies (2) formées sur au moins une première surface latérale extérieure de celle-ci et également un ou plusieurs évidements (3) formés sur une seconde surface latérale extérieure, qui est opposée à ladite première surface latérale extérieure.

5. Procédé de production de briques de construction (1) comprenant les étapes séquentielles suivantes :
a) mélanger de la boue de marbre et/ou de la poussière de marbre avec du ciment et de l'eau dans un mélangeur pour obtenir un mortier pouvant être moulé,
b) introduire le mortier pouvant être moulé obtenu dans une extrudeuse à vide comprenant un moule à forme creuse pour produire des matériaux creux extrudés,
c) couper des matériaux extrudés formés dans une unité de coupe pour former des briques ayant chacune au moins une cavité (1.1),
c2) verser un matériau d'isolation préalablement préparé dans au moins une cavité (1.1) de chaque brique (1), ledit matériau d'isolation étant un béton cellulaire,
d) cuire les briques formées,
e) scalper les briques cuites (1) pour les amener à des dimensions prédéfinies,
f) conditionner les briques de construction obtenues (1),
ledit procédé comprenant en outre les étapes de préparation séquentielles suivantes dudit matériau d'isolation, effectuées avant l'étape c2 du procédé ci-dessus :
I. mélanger de la boue de marbre et/ou de la poussière de marbre avec du ciment pour obtenir un coulis de béton,
II. combiner un agent moussant et de l'eau conjointement avec de l'air pour obtenir de la mousse,
III. mélanger le coulis de béton obtenu à l'étape I) et la mousse obtenue à l'étape II) pour obtenir un béton cellulaire en tant que matériau d'isolation.

6. Procédé de production de briques de construction (1) selon la revendication 5, dans lequel un ou plusieurs parmi un agrégat de pierre ponce, de la perlite, du clinker, un polymère hydrofuge, un agent entraîneur d'air, de la calcite enrobée, des fibres de liant et du sable de silice sont ajoutés dans le mélangeur pour obtenir ledit mortier, en plus des ingrédients divulgués à l'étape a) de la revendication 5.

7. Procédé de production de briques de construction (1) selon la revendication 5, dans lequel un ou plusieurs parmi du sable de silice, de la cendre et de la pierre ponce sont mélangés avec les ingrédients divulgués à l'étape I) de la revendication 5, pour obtenir ledit coulis de béton.
